**Europäisches Patentamt**

**European Patent Office**

**Office européen des brevets**

(11) Veröffentlichungsnummer: **0 217 285**
**B1**

(12) **EUROPÄISCHE PATENTSCHRIFT**

(45) Veröffentlichungstag der Patentschrift:
**11.04.90**

(21) Anmeldenummer: **86113157.1**

(22) Anmeldetag: **24.09.86**

(51) Int. Cl.⁴: **H04N 5/63, H04N 5/21,**
**H02M 3/335, G09G 1/00**

(54) **Nichtsynchronisierte Stromversorgungseinrichtung für einen Monitor.**

(30) Priorität: **27.09.85 DE 3534532**

(43) Veröffentlichungstag der Anmeldung:
**08.04.87 Patentblatt 87/15**

(45) Bekanntmachung des Hinweises auf die Patenterteilung:
**11.04.90 Patentblatt 90/15**

(84) Benannte Vertragsstaaten:
**CH DE FR GB IT LI NL SE**

(56) Entgegenhaltungen:
**US-A- 4 073 004**

(73) Patentinhaber: **Siemens Aktiengesellschaft,**
**Wittelsbacherplatz 2, D-8000 München 2(DE)**

(72) Erfinder: **Panse, Hubert, Dipl.-Ing., Kleinstrasse 52,**
**D-8000 München 70(DE)**
Erfinder: **Schlegel, Wolfgang, Dipl.-Ing. (FH),**
**Mathunistrasse 9a, D-8000 München 21(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine nichtsynchronisierte Stromversorgungseinrichtung für einen Monitor gemäß dem Oberbegriff des Patentanspruches 1.

Zum Umformen der Netzwechselspannung auf für den Betrieb von Datensichtgeräten, Monitoren u.dgl. benötigte Gleichspannungen werden seit einiger Zeit Schaltnetzteile eingesetzt. Diese Schaltnetzteile verbinden bei sehr kompaktem Aufbau die Vorteile einer hohen Regelgenauigkeit mit einem guten Wirkungsgrad.

Aufbau und Funktion derartiger Schaltnetzteile sind allgemein bekannt und beispielsweise in den Buch "Schaltnetzteile: Grundlagen, Entwurf, Schaltungsbeispiele" von Joachim Wüstehube, expert Verlag, 1979, ausführlich beschrieben.

In den Schaltnetzgeräten wird die Netzspannung zunächst gleichgerichtet und gesiebt. Die so gewonnene Gleichspannung wird einem geregelten Gleichspannungswandler zugeführt. Ein elektronischer Schalter ermöglicht hierbei in Verbindung mit einem Übertrager, sekundärer Gleichrichtung und einem Siebkreis bzw. mit einem magnetischen Speicher und einem Ladekondensator die galvanisch getrennte Übertragung mit geringen Verlusten. Der Mittelwert der Ausgangsspannung läßt sich dadurch beeinflussen, daß man den elektronischen Schalter periodisch öffnet und schließt und das Verhältnis von Einschalt- zu Periodendauer (Tastverhältnis) ändert.

Bei der Verwendung derartiger Schaltnetzteile zur Stromversorgung von Monitoren kommt es durch Interferenzen zwischen Stromversorgungs-Schaltfrequenz und Zeilenfrequenz des Monitors zu Bildstörungen, falls die Schaltfrequenz nicht exakt mit der Zeilenfrequenz synchronisiert ist.

Außerdem wird der Elektronenstrahl infolge einer Einstreuung der Magnetfelder des Übertragers in seiner Intensität moduliert und die Zeichen auf dem Bildschirm verändern ihre Helligkeit, so daß ein Flimmern der Zeichen auftritt. Insbesondere bereitet in vielen Anwendungen der Einfluß von Welligkeit der Stromversorgung auf das Monitorbild Probleme. Kleine, überlagerte Störungen der Versorgungsspannung werden im Bild als Flimmern, Streifenbildung oder Schnee sichtbar. Diese Effekte wirken sich für den Betrachter störend aus und müssen im Interesse einer guten Bildqualität vermieden werden.

Eine bekannte Lösung ist, die Schaltfrequenz des Wandlers mit der Zeilenfrequenz des Monitors zu synchronisieren.

So ist aus der DE-B 1 294 527 ein Verfahren zur Stabilisierung einer Versorgungsspannung für Verbraucher mit eigener Taktfrequenz unter Verwendung eines im Längszweig der Stabilisierungsschaltung als Stellglied dienenden Schalttransistors, einer als Energiespeicher dienenden Drosselspule und einer im Querzweig angeordneten, entgegengesetzt zur Betriebsspannung gepolten Diode bekannt. Der Schalttransistor wird dabei von einer Rechtecksteuerspannung konstanter Periodendauer und mit einem von der zu stabilisierenden Ausgangsspannung abhängigen Tastverhältnis so gesteuert, daß sich die Frequenz der Rechtecksteuerspannung selbsttätig auf die Taktfrequenz oder auf ein ganzzahliges Vielfaches der Taktfrequenz des Verbrauchers einstellt, sobald dieser eingeschaltet wird. Ein Nachteil dieses Verfahrens liegt darin, daß die vom Verbraucher abgegebene Taktfrequenz erst über einen Gegentaktverstärker, der wiederum zwei Übertrager enthält, aufbereitet werden muß, um dann einen Steuerteil zugeführt zu werden. Diese Übertrager bedingen erhöhte Kosten, zusätzlichen Raumbedarf, sowie größere Verlustleistung des gesamten Schaltreglers.

Weiters ist aus der DE-C 25 27 112 ein Schaltnetzteil für ein Datensichtgerät bekannt, daß einen mit einem Steuereingang versehenen Oszillator enthält, der durch seine Signale die Schaltfrequenz des Schaltnetzgerätes bestimmt. Das Datensichtgerät enthält einen Taktgeber, der zum Aufbau eines Bildes auf einem Bildschirm des Datensichtgerätes Taktimpulse vorgegebener Folgefrequenz und vorgegebener Dauer erzeugt. Der Oszillator ist dabei über eine Trennstufe mit diesem Taktgeber verbunden, so daß die Folgefrequenz der vom Oszillator abgegebenen Signale mit der Folgefrequenz der vom Taktgeber abgegebenen Taktimpulse synchronisiert wird. Damit werden zeitlichen Änderungen sowohl der Lage als auch der Helligkeit der Zeichen auf dem Bildschirm vermieden, die sich bei kleinen Unterschieden zwischen der Folgefrequenz der Taktimpulse und der Schaltfrequenz des Schalttransistors infolge von Schwebungen ergeben.

Dieses Verfahren der Synchronisation der Zeilenfrequenz des Monitors mit der Schaltfrequenz der getakteten Monitorstromversorgung hat den Nachteil, daß der Aufwand an Bauteilen und die damit verbundenen Kosten relativ groß sind. So muß der Taktgeber zusätzlich einen Frequenzteiler enthalten, der aus den Signalen für den Aufbau eines Bildes am Bildschirm Taktimpulse zum Synchronisieren des Netzgerätes erzeugt. Außer dem Oszillator ist weiterhin noch eine zusätzliche Trennstufe z.B. ein optisches Koppelelement oder ein Übertrager nötig.

Diese mit technischem sowie finanziellem Aufwand verbundene Verfahren der Synchronisierung zwischen Schaltfrequenz des Wandlers und der Zeilenfrequenz des Monitors schließt aber den Einsatz von kostengünstigen, freischwingenden Wandlern aus.

Aufgabe der Erfindung ist es, eine Stromversorgungseinrichtung für einen Bildschirm eines Kommunikationsendgerätes anzugeben, bei der ohne Synchronisation zwischen der Schaltfrequenz der Stromversorgung mit der Zeilenfrequenz des Bildschirm der Einfluß von Welligkeiten der Stromversorgung auf die Bildqualität minimiert ist.

Diese Aufgabe wird bei einer Stromversorgungseinrichtung der eingangs genannten Art erfindungsgemäß mit den im kennzeichnenden Teil des Patentanspruches 1 genannten Merkmalen gelöst.

Der Vorteil der Erfindung liegt darin, daß durch die Wahl der Schaltfrequenz des elektronischen Schalters der Stromversorgung in die Mitte zweier aufeinanderfolgender Vielfachen der Zeilenfrequenz des Monitors zu dessen Stromversorgung kostengünstige freischwingende Wandler eingesetzt werden können. Dabei genügt es im Arbeitsbereich die Schaltfrequenz mit einer Genauigkeit von einigen 100 Hz einzuhalten.

Um die individuellen Werte der Störgrenze für jeden Monitor zu bestimmen, müssen die zulässigen Spannungswelligkeiten für Monitore ermittelt werden. Damit können die Anforderungen an eine Monitorstromversorgung so beschrieben werden, daß eine Synchronisierung der Frequenzen überflüssig und der Einsatz kostengünstiger, freischwingender Wandler der Monitorstromversorgung vorteilhaft ist.

Eine Ursache für Bildstörungen liegt in Amplitude und Frequenz der vom Schaltregler erzeugten Ausgangswechselspannung. Diese ist mit einem Oszillographen nur schwer zu messen, da sie mit der Amplitude und Frequenz der Bildwechselspannung moduliert wird. Um über die Einflüsse dieser möglichen Ursache für Bildstörungen eine Aussage treffen zu können, muß die Spannungswelligkeit spektral gemessen werden. Da die Eingangsimpedanz des Monitors meist Tiefpaßcharakter hat, genügt es, hier nur die Amplitude der Grundwelle zu untersuchen, wobei um ein relatives Vergleichskriterium zu haben, sowie über Leitungen eingekoppelte Störungen zu unterdrücken, die Meßstelle am Monitor mit einem definierten Tiefpaß abgeschlossen werden muß.

Anhand der Zeichnung wird die Erfindung nun näher erläutert. Dabei zeigt

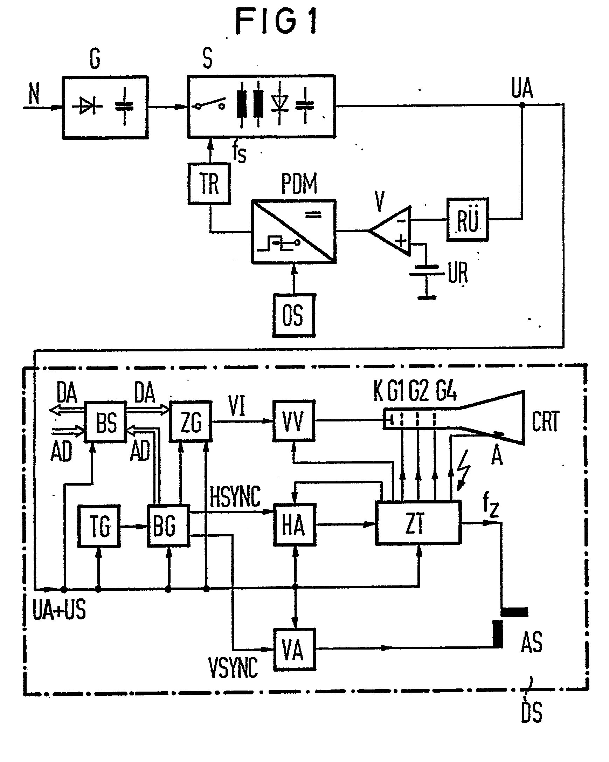

Fig. 1 beispielhaft ein Blockschaltbild eines Datensichtgerätes mit dazugehöriger Stromversorgungseinrichtung und

Fig. 2 einen Meßaufbau für die Bestimmung der günstigsten Schaltfrequenz der Stromversorgungseinrichtung.

Die Netzwechselspannung N wird mit Hilfe eines Gleichrichterelementes G gleichgerichtet und gesiebt. Die daraus gewonne Gleichspannung wird einem elektronischen Schalter S zugeführt, der von einer Pulsdauermodulationsstufe PDM gesteuert wird. Die durch Zerhacken gewonnene Rechteckspannung wird mit Hilfe eines Übertragers transformiert. Anschließend wird gleichgerichtet und gesiebt. Die Ausgangsspannung UA stabilisiert man mit Hilfe einer Regelung, die das Tastverhältnis des Schaltvorganges beeinflußt. Hierzu wird die Ausgangsspannung UA über ein Rückkopplungsnetzwerk RÜ abgefragt und mit einer festen Referenzspannung UR verglichen. Die Ausgangsspannung UA wird dabei an den invertierenden Eingang des Regelverstärkers V gelegt, während die Referenzspannung UR mit dem nichtinvertierenden Eingang des Regelverstärkers V verbunden wird. Das Ausgangssignal des Regelverstärkers V, die Regelabweichung wird zusammen mit einer Sägezahnspannung (oder Dreieckspannung) des Oszillators OS dem Pulsdauermodulator PDM zugeführt, der daraus ein Rechtecksignal mit Oszillatorfrequenz erzeugt, dessen Tastverhältnis von der Regelabweichung abhängt. Eine Treiberstufe TR steuert den elektronischen Schalter S.

Die Ausgangsspannung UA, der eine Störspannung US überlagert sein kann, wird dem Datensichtgerät DS zugeführt. Der Bildgenerator BG veranlaßt den Bildspeicher BS durch zyklisches Anlegen der Adressen AD zur Übergabe der anzuzeigenden Daten DA an den Zeichengenerator ZG. Dabei werden die Daten DA entweder zeichenweise direkt oder blockweise (zeilenweise) gepuffert weitergegeben, so daß eine hier nicht dargestellte Gerätesteuerung die zwischen diesen Zugriffen verbleibenden Lücken zum Verändern des Bildes ausnutzen kann. Im Zeichengenerator ZG, dessen Arbeitsgeschwindigkeit ebenfalls der Bildgenerator BG bzw. der quarzgesteuerte Taktgenerator TG vorgibt, werden die codierten Zeichen für den Videoverstärker VV umgesetzt. Der Bildgenerator erzeugt außerdem die Synchronisiersignale HSYNC bzw. VSYNC für die Horizontalablenkstufe HA und die Vertikalablenkstufe VA. Weiterhin stößt er den Zeichengenerator ZG zur Anzeige einer Schreibmarke auf dem Bildschirm CRT an. Der Bildschirm CRT wandelt elektrische Signale in optische Signale um. Er besitzt die drei Eingänge für Videosignal VI, Horizontalsynchronsignal HSYNC, Vertikalsynchronsignal VSYNC und einen Eingang für die Versorgungsspannung UA. Die für Modulation und Ablenkung des energiereichen Elektronenstrahls relativ hohe Spannungen und Ströme werden im Videoverstärker VV und in den beiden Ablenkstufen HA und VA erzeugt.

Jede der beiden Ablenkstufen HA und VA bestehen im wesentlichen aus einem Oszillator- und einem Leistungsteil. Die freischwingenden Oszillatoren werden durch die Synchronsignale HSYNC und VSYNC auf die richtige Frequenz eingerastet. Die Endstufen des Leistungsteils treiben die mehrere Ampere starken, sägezahnförmigen Ströme zum Schreiben durch die beiden Ablenkspulen AS.

Der Videoverstärker VV wandelt das vom Zeichengenerator ZG kommende Signal VI in die zur Strahlstromsteuerung erforderlichen Steuerspannung für die Kathode K bzw. das Gitter G1 um. Seine Versorgungsspannung bezieht er ebenso wie die übrigen Elektroden G2, G4 und A des Bildschirms CRT vom Zeilentrafo ZT.

Wird zur Stromversorgung eines solchen Monitors ein freischwingendes, nichtsynchronisiertes Schaltnetzteil eingesetzt und liegt dabei die Schaltfrequenz des elektronischen Schalters in der Mitte zwischen zweier aufeinanderfolgenden Vielfachen der Zeilenfrequenz des Monitors, so tritt keine Beeinträchtigung der Bildqualität auf.

Bei der Messung des Spektrums der maximal zulässigen Spannungswelligkeit der Monitorstromversorgung zeigt sich, daß der Störabstand am größten ist, entweder bei exakter Synchronisation der Stromversorgungsschaltfrequenz mit der Zeilenfrequenz oder für die Wahl der Schaltfrequenz in der Mitte zwischen zweier aufeinanderfolgenden Vielfachen der Zeilenfrequenz. Der mathematische Ausdruck hierfür lautet

$$f_s \approx ( 1,5 + x) \cdot f_z \quad \text{mit} \quad x \in \mathbb{N}_0 ,$$

wobei
$f_s$ = Schaltfrequenz des elektronischen Schalters
$f_z$ = Zeilenfrequenz des Monitors
$x$ = Element der natürlichen Zahlen.

Für eine typische Zeilenfrequenz eines Monitors von 20 kHz folgt daraus, daß für die Schaltfrequenz des elektronischen Schalters ein Wert von 30 kHz, 50 kHz, 70 kHz usw. gewählt werden kann, ohne daß es dabei auf dem Monitor zu Bildstörungen kommt.

Diese angegebenen Frequenzen können durch geeignete Dimensionierung der Bauelemente des freischwingenden Wandlers erzeugt werden.

Für den oberen Grenzwert der nach dieser Vorschrift gewählten Schaltfrequenz sind im wesentlichen die Eigenschaften des elektronischen Schalters entscheidend, insbesondere bedingen die mit steigender Frequenz kürzer werdenden Umschaltzeiten eine optimale Gestaltung sehr vieler Details, z.B. eine aufwendigere Ansteuerung des elektronischen Schalters.

Im folgenden wird ein Meßaufbau angegeben, der für einen Monitor mit vorgegebener Zeilenfrequenz die Bestimmung der unkritischen Schaltfrequenzen erlaubt.

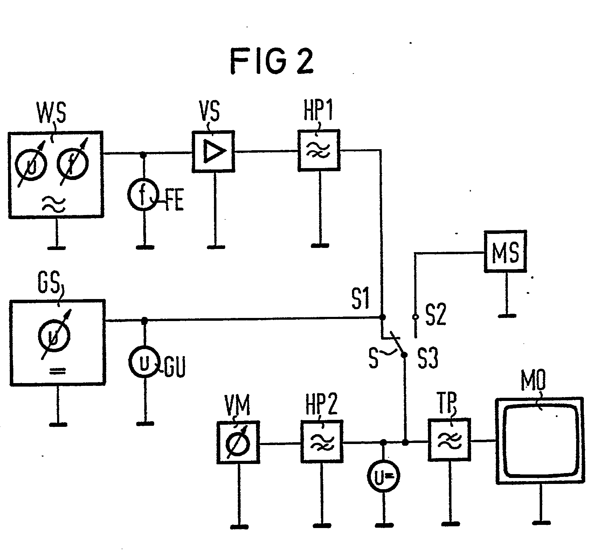

Diese in der Figur 2 dargestellte Meßschaltung besteht aus einer in allen wesentlichen Parametern veränderlichen Gleichspannungsquelle mit sinusförmigem Wechselanteil. Hierzu sind eine in der Amplitude und Frequenz variierbare Wechselspannungsquelle WS und parallel dazu eine Festfrequenz FE über einen Verstärker VS und einem Hochpaß HP1 an eine Klemme S1 eines Umschalters S gelegt. Eine dem Betrag nach veränderbare Gleichspannungsquelle GS und parallel dazu eine konstante Gleichspannungsquelle GU sind ebenfalls an die Klemme S1 geschaltet. An die andere Klemme S2 des Umschalters S ist eine bezüglich ihrer Schaltfrequenz festzulegende Monitorstromversorgung MS angeschlossen. Dem Eingang des Monitors MO ist ein Tiefpaß TP vorgeschaltet, der mit der Klemme S3 des Umschalters S verbunden ist. Parallel hierzu ist über einen zur Gleichspannungsabkopplung dienenden Hochpaß HP2 ein selektives Voltmeter VM angeschlossen.

Zuerst wird die Monitorstromversorgung MS über den Schalter S an den Monitor MO angeschlossen. Mit dem selektiven Voltmeter VM können nun die Frequenz sowie die Amplitude der ersten Grundwelle exakt bestimmt werden. Der Gleichanteil der Spannung wird ebenfalls gemessen. Nach Umlegen des Schalters S können nun die gemessenen Werte an dem entsprechenden Geräten reproduzierend eingestellt werden. Nun wird die Amplitude der Wechselspannung WS solange erhöht, bis eine sichtbare Bildstörung eintritt. Jetzt wird die Amplitude wieder solange verkleinert, bis der festgestellte Effekt nicht mehr zu beobachten ist. Die Differenz der gemessenen Amplitudenwerte dieser Messung, sowie der Messung mit Stromversorgung MS stellt den Störsicherheitsabstand der Stromversorgung MS dar. Kann die Schaltfrequenz des Wandlers durch Bauteile-Toleranzen schwanken, so ist der gesamte Frequenztoleranzbereich durchzumessen, wobei die Amplitude, wie oben beschrieben, zu verringern ist. Zum Ermitteln der unkritischen Bereiche für die Schaltfrequenz des Wandlers wird der Bereich zwischen Grund- und erster Oberwelle der Zeilenfrequenz in beliebig viele Teilabschnitte unterteilt und für jede Frequenz die maximal zulässige Spannung ermittelt. Die Schaltfrequenz des Wandlers wird dann in den unkritischsten Bereich gelegt, wobei der Sicherheitsabstand der Amplitude nach eigenem Ermessen festzulegen ist.

## Patentansprüche

1. Stromversorgungseinrichtung für den Bildschirm eines Kommunikationsendgerätes o.dgl. mit einem getakteten Spannungswandler, der aus einer Netzwechselspannung mindestens eine für den Betrieb des Bildschirms geeignete Gleichspannung erzeugt und einer dem Bildschirm zugeordneten Ablenkeinrichtung mit vorgegebener Zeilenfrequenz, dadurch gekennzeichnet, daß die Schaltfrequenz des im Spannungswandler taktenden elektronischen Schalters (S) in der Mitte zwischen zwei aufeinanderfolgenden Vielfachen der Zeilenfrequenz ($f_z$) des Bildschirms liegt.

2. Stromversorgungseinrichtung nach Anspruch 1, dadurch gekennzeichnet, daß der getaktete Spannungswandler als freischwingendes Schaltnetzteil ausgebildet ist.

3. Stromversorgungseinrichtung nach Anspruch 1 oder 2, dadurch gekennzeichnet, daß für die Schaltfrequenz ($f_s$) des elektronischen Schalters (S) im Arbeitsbereich eine Genauigkeit von einigen hundert Hertz gilt.

## Claims

1. Current supply device for the screen of a communications terminal or the like, having a clock-controlled voltage converter which, from an AC voltage supply, generates at least one DC voltage which is suitable for operation of the screen, and having a deflecting device associated with the screen with a predetermined line frequency, characterized in that the switching frequency of the electronic switch (S) clock-controlling the voltage converter lies midway between two consecutive multiples of the line frequency ($f_z$) of the screen.

2. Current supply device according to Claim 1, characterized in that the clock-controlled voltage converter is designed as a free-oscillating switched-mode power supply.

3. Current supply device according to Claim 1 or 2, characterized in that an accuracy of a few hundred Hertz applies to the switching frequency ($f_s$) of the electronic switch (S) in the working range.

## Revendications

1. Dispositif d'alimentation en courant pour l'écran d'un appareil terminal de communication ou analogue, comportant un transformateur de tension commandé de façon cadencée, qui produit, à partir d'une tension alternative du réseau, au moins une tension continue convenant pour le fonctionnement de l'écran, et un dispositif de balayage, associé à l'écran et possédant une fréquence de lignes prédéterminée, caractérisé par le fait que la fréquence de commutation du commutateur électronique (S), qui commande de façon cadencée le transformateur de tension, est située en position médiane entre deux multiples successifs de la fréquence de lignes ($f_z$) de l'écran.

2. Dispositif d'alimentation en courant suivant la revendication 1, caractérisé par le fait que le convertisseur de tension commandé de façon cadencée est réalisé sous la forme d'un bloc d'alimentation réseau commuté à oscillations libres.

3. Dispositif d'alimentation en courant suivant la revendication 1 ou 2, caractérisé par le fait qu'une précision de quelques containes de hertz est valable pour la fréquence de commutation ($f_S$) du commutateur électronique (S), dans sa plage de travail.

# FIG 1

# FIG 2